Europäisches Patentamt

European Patent Office

Office européen des brevets

(11) Veröffentlichungsnummer: **0 218 146**
**B1**

(12) **EUROPÄISCHE PATENTSCHRIFT**

(45) Veröffentlichungstag der Patentschrift:
13.06.90

(21) Anmeldenummer: 86113156.3

(22) Anmeldetag: 24.09.86

(51) Int. Cl.⁵: **H04N 3/185, G09G 1/00**

(54) Sekundär-Schaltregler für Monitorstromversorgung.

(30) Priorität: 27.09.85 DE 3534560

(43) Veröffentlichungstag der Anmeldung:
15.04.87 Patentblatt 87/16

(45) Bekanntmachung des Hinweises auf die Patenterteilung:
13.06.90 Patentblatt 90/24

(84) Benannte Vertragsstaaten:
CH DE FR GB IT LI NL SE

(56) Entgegenhaltungen:
EP-A- 0 005 391
EP-A- 0 041 883
EP-A- 0 128 223
US-A- 4 079 418

U. TIETZE et al.: "Halbleiter-Schaltungstechnik", 5. Auflage, 1980, Seiten 390-396, Springer-Verlag, Berlin, DE

(73) Patentinhaber: Siemens Aktiengesellschaft,
Wittelsbacherplatz 2, D-8000 München 2(DE)

(72) Erfinder: Belz, Achim, Dipl.-Ing. (FH), Pichtstrasse 1,
D-8000 München 70(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Schaltungsanordnung zum Betrieb eines Sekundär-Schaltreglers gemäß dem Oberbegriff des Patentanspruches 1.

Zum Umformen der Netzwechselspannung auf für den Betrieb von Datensichtgeräten, Bildschirmen und dergleichen benötigte Gleichspannungen ist es üblich, Schaltnetzteile bzw. Sekundär-Schaltregler einzusetzen. Diese Stromversorgungsgeräte verbinden bei sehr kompakten Aufbau die Vorteile einer hohen Regelgenauigkeit mit einem gutem Wirkungsgrad.

Der prinzipielle Aufbau eines sekundär getakteten Schaltreglers besteht darin, daß ein elektronischer Schalter, z.B. ein Schalttransistor in Reihe mit einer Gleichspannungsquelle, einer Induktivität und dem Verbraucher liegt. Der Mittelwert der am Verbraucher abfallenden Spannung läßt sich dadurch beeinflussen, daß man den elektronischen Schalter periodisch öffnet und schließt und das Verhältnis von Impuls- zu Periodendauer eines Pulses (Tastverhältnis) ändert. Nach dem Schalter benötigt man ein Siebglied, um die Welligkeit der Spannung zu beseitigen. Damit kein Leistungsverlust entsteht, verwendet man hierzu ein LC-Filter. Da sich der elektronische Schalter auf der Sekundärseite des Netztransformators befindet, bezeichnet man einen solchen Regler als Sekundär-Schaltregler.

Die Wirkungsweise derartiger Sekundär-Schaltregler und deren Aufbau ist z.B. aus dem Buch U.Tietze, Ch. Schenk; Halbleiterschaltungstechnik; 5. Auflage, 1980, S. 390-396, Springer Verlag Berlin, Kapitel 16.5 u. 16.5.1 entnehmbar.

In speziellen Anwendungsfällen derartiger Stromversorgungsgeräte ist es nötig, die Schaltfrequenz des elektronischen Schalters mit anderen Signalabläufen des zu versorgenden Gerätes zu synchronisieren. Dies trifft insbesondere bei der Stromversorgung von Monitoren zu, die im Interesse einer guten Bildqualität eine möglichst störfreie Gleichspannung benötigen. Die analogen Schaltungsteile im Monitor reagieren sehr empfindlich auf Störungen der Versorgungsspannung. Kleine, überlagerte Störungen werden im Bild als Flimmern, Streifenbildung oder als Schnee sichtbar. Diese Effekte wirken sich für den Betrachter störend aus und müssen deshalb vermieden werden.

Der Aufbau von Bildanzeigeeinheiten für Darstellungen nach dem zeilenweise geschriebenen Rasterverfahren für Kommunikationsendgeräte wie Speicherschreibmaschinen mit Monitore ist allgemein bekannt und z.B. in dem Buch "Kommunikations-Endgeräte" von Friedrich Ohmann (Herausgeber); Kapitel 6; Springer Verlag 1983, beschrieben.

Eine solche Bildanzeigeeinheit enthält neben einem Bild- und und Zeichengenerator auch die für das jeweilige Ablenk- und Schreibverfahren geeigneten Ablenkeinheiten. Der Bildgenerator erfüllt in erster Linie die Aufgabe, ausgehend von einen in Zeilen und Spalten vorgegebenen Bildformat, die Synchronisiersignale (Rückläufe des Elektronenstrahls) in horizontaler und vertikaler Richtung zu erzeugen und an die Ablenkeinrichtung weiterzugeben.

Aus der DE-C 25 27 112 (entspricht der US-A 4 079 418) ist ein Schaltnetzteil für ein Datensichtgerät bekannt, das einen mit einem Steuereingang versehenen Oszillator enthält, der durch seine Signale die Schaltfrequenz des Schaltnetzgerätes bestimmt. Das Datensichtgerät enthält einen Taktgeber, der zum Aufbau eines Bildes auf dem Bildschirm des Datensichtgerätes Taktimpulse vorgegebener Folgefrequenz und vorgegebener Dauer erzeugt. Der Oszillator ist dabei über eine Trennstufe mit diesem Taktgeber verbunden, so daß die Folgefrequenz der vom Oszillator abgegebenen Signale mit der Folgefrequenz der vom Taktgeber abgegebenen Taktimpulse synchronisiert wird. Damit werden zeitliche Änderungen sowohl der Lage als auch der Helligkeit der Zeichen auf dem Bildschirm vermieden, die sich bei kleinen Unterschieden zwischen der Folgefrequenz der Taktimpulse und der Schaltfrequenz des Schalttransistors infolge von Schwebungen ergeben.

Dieses Verfahren der Synchronisation der Zeilenfrequenz des Monitors mit der Schaltfrequenz der getakteten Monitorstromversorgung hat den Nachteil, daß der Aufwand an Bauteilen und die damit verbundenen Kosten relativ groß sind. So muß der Taktgeber zusätzlich einen Frequenzteiler enthalten, der aus den Signalen für den Aufbau eines Bildes am Bildschirm Taktimpulse zum Synchronisieren des Netzgerätes erzeugt. Außer dem Oszillator ist weiterhin noch eine zusätzliche Trennstufe z.B. ein optisches Koppelelement oder ein Übertrager nötig.

Der Erfindung liegt daher die Aufgabe zugrunde, eine getaktete Monitorstromversorgung für ein Datensichtgerät anzugeben, die kostengünstig ist und mit einfachen Mitteln Bildstörungen wie Flimmern, Schnee sowie Lage- und Helligkeitsschwankungen der auf dem Bildschirm dargestellten Zeichen, die infolge von Störungen der Versorgungsspannung auftreten, verhindert.

Diese Aufgabe wird bei einer Schaltungsanordnung der eingangs genannten Art durch die im kennzeichnenden Teil des Patentanspruches 1 genannten Merkmale gelöst.

Vorteilhafte Weiterbildungen der Erfindung sind in den abhängigen Ansprüchen angegeben.

Da das Einschalten des Schalttransistors die größten Störungen verursacht, wird dieser Einschaltvorgang in die Rücklaufphase des Bildstrahls gelegt. In dieser Phase ist der Strahl dunkel getastet und es können dabei keine Bildstörungen der oben genannten Art auftreten.

Die Synchronisation von Zeilenfrequenz des Monitors mit der Schaltfrequenz des elektronischen Schalters wird bewirkt, in dem die von einem Bildgenerator zum Aufbau eines Bildes auf dem Bildschirm des Datensichtgerätes erzeugten Taktimpulse, nämlich das Synchronisiersignal für die Zeilenablenkung, das den Einschaltzeitpunkt des Schalttransistors in dem Schaltregler festlegt, über einen Verstärker in die Regelung des Schaltreglers eingekoppelt wird. Dazu wird das am Ausgang dieses Verstärkers anstehende Signal mit einem Hochpass differenziert und mit einem festgelegten Spannungshub auf den Eingang eines Regelverstärkers geschaltet. Damit das Signal wirksam werden kann, wird zwischen dem Eingang des Regelverstärkers und der Ausgangsspannung ein Widerstand eingefügt.

Die Schaltung gibt nur mit der abfallenden Flanke des Synchronisiersignals einen Impuls ab. Dadurch wird erreicht, daß die Synchronisation von Zeilenfrequenz des Monitors mit der Schaltfrequenz des Schaltreglers ohne einer Änderung der Polarität der bereits im Schaltregler enthaltenen, zur Spannungsumsetzung nötigen Bauelemente, insbesondere die des elektronisch getakteten Schalters erfolgen kann.

Ein weiterer Vorteil dieser Schaltungsanordnung liegt darin, daß die Rückladung des Kondensators im Hochpass mit hochohmigen Widerständen erfolgt und deshalb ein geringer Rückladestrom fließt, der die Regelung des Schaltreglers nicht wesentlich beeinflußt. Die Regelung der Ausgangsspannung des Schaltreglers wird in bekannter Weise durch die Veränderung von Einschalt- zu Periodendauer (Tastverhältnis) bestimmt. Zum Zeitpunkt, an dem das Ende der Einschaltphase bestimmt wird, ist die Einwirkung der Synchronisiereinrichtung minimal. Deshalb kann weiterhin eine hohe Regelgenauigkeit des Schaltreglers garantiert werden. Eine solche Schaltung läßt sich allgemein bei allen freilaufenden Schaltreglern einfügen, deren Freilauffrequenz geringer ist als die Synchronisierfrequenz.

Anhand der Zeichnung wird die Erfindung nun näher erläutert. Dabei zeigt

Fig. 1 das Blockschaltbild der Stromversorgungs-Anordnung,

Fig. 2 den Stromlaufplan eines nach dem erfindungsgemäßen Prinzip arbeitenden Schaltreglers,

Fig. 3 den zeitlichen Verlauf von ausgewählten Signalen innerhalb dieses Schaltreglers.

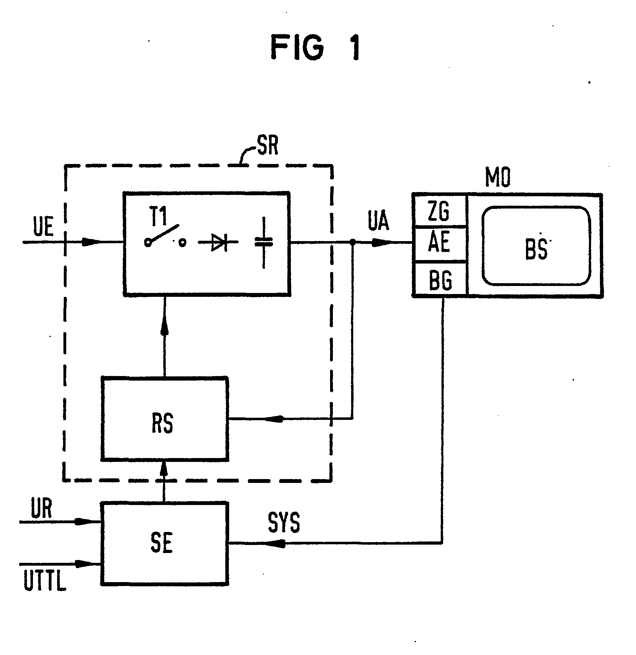

Der in Fig. 1 dargestellte Schaltregler SR zerhackt eine an seinem Eingang anliegende, ungeregelte Gleichspannung UE mit Hilfe eines elektronisch getakteten Schalters T1. Die durch Zerhacken gewonnene Rechteckspannung wird gleichgerichtet, gesiebt und mittels einer Regelschaltung RS, die das Verhältnis von Impulsdauer zu Periodendauer des Schaltvorganges beeinflußt, wird die Ausgangsspannung UA des Schaltreglers SR stabilisiert. An dieser Ausgangsspannung UA wird ein Monitor MO betrieben, der neben einem Zeichengenerator ZG, einen Bildgenerator BG enthält, der ein Synchronisiersignal SYS für die Ablenkung eines Bildstrahls auf dem Bildschirm BS des Monitors MO erzeugt und an eine Ablenkeinrichtung AE weitergibt.

Das von dem Bildgenerator BG erzeugte Synchronisiersignal SYS für die Zeilenablenkung des Bildstrahls wird einer Synchronisiereinrichtung SE zugeführt. An dieser Synchronisiereinrichtung SE liegen außerdem noch eine Referenzspannung UR und eine feste Spannung UTTL, die beide durch hier nicht dargestellte Spannungsteiler von der Eingangsspannung UE abgeleitet werden. Die Synchronisiereinrichtung SE gibt in Abhängigkeit des Synchronisiersignals SYS einen Impuls zur definierten Steuerung des elektronischen Schalters T1 ab, wobei dieser Impuls in die Regelschaltung RS zur Regelung der Ausgangsspannung UA des Schaltreglers SR eingekoppelt wird.

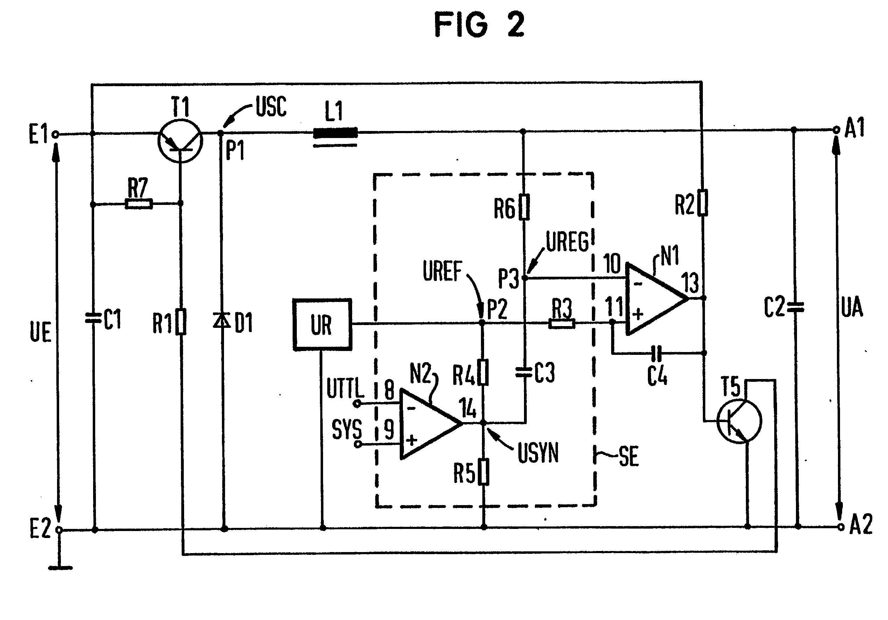

In Fig. 2 ist ein Sekundärschaltregler als Tiefsetzsteller dargestellt. Dieser weist zwei Eingangsklemmen E1 und E2 auf, an denen eine Eingangsspannung UE anliegt, sowie zwei Ausgangsklemmen A1 und A2, an denen eine Ausgangsspannung UA für den Monitor MO abgreifbar ist. Die unmittelbare Verbindung der Eingangsklemme E2 mit der Ausgangsklemme A2 stellt die Masseleitung dar. Parallel zu den Eingangsklemmen E1 und E2 ist ein Kondensator C1, parallel zu den Ausgangsklemmen A1 und A2 ein Kondensator C2 geschaltet. Die Eingangsklemme E1 ist über eine Serienschaltung aus Emitter-Kollektor-Strecke eines Schalttransistors T1 und einer Induktivität L1 mit der Ausgangsklemme A1 verbunden. Der Basisanschluß des Schalttransistors T1 ist über einen Widerstand R1 an den Kollektoranschluß eines Steuertransistors T5 und über einen Widerstand R7 an die Eingangsklemme E1 gelegt. Außerdem ist die Eingangsklemme E1 über einen Widerstand R2 sowohl mit der Ausgangsklemme 13 eines Verstärkers N1, als auch mit der Basis des Steuertransistors T5 verbunden. Der Emitteranschluß dieses Steuertransistors T5 liegt an Masse. Am Kollektoranschluß des Schalttransistors T1 befindet sich ein Meßpunkt P1, von dem eine in Sperrichtung gepolte Diode D1 gegen Masse geschaltet ist. Eine Referenzspannungsquelle UR ist mit ihrem einen Ende über einen Widerstand R3 an einen Eingang 11 des Verstärkers N1 geführt und liegt mit ihrem anderen Ende an Masse. Ein Meßpunkt P2, der zwischen der Referenzspannungsquelle UR und dem Widerstand R3 liegt, wird über die Reihenschaltung der Widerstände R4 und R5 mit Masse verbunden. Zwischen den Widerständen R4 und R5 ist eine Ausgangsklemme 14 des Verstärkers N2 geschaltet. Diese Ausgangsklemme 14 ist weiters über die Serienschaltung bestehend aus einem Kondensator C3 und einem Widerstand R6 mit der Ausgangsklemme A1 verbunden. Ein Meßpunkt P3 der zwischen dem Widerstand R6 und dem Kondensator C3 liegt, ist auf eine Eingangsklemme 10 des Verstärkers N1 geführt. Die Eingangsklemme 11 des Verstärkers N1 ist über einen Kondensator C4 mit der Ausgangsklemme 13 dieses Verstärkers N1 verbunden.

Ein von einem Bildgenerator BG zur Zeilenablenkung des Bildstrahls erzeugtes Synchronisiersignal SYS wird dem Eingang 9 des Verstärkers N2 zugeführt, während am Eingang 8 dieses Verstärkers N2 eine feste Spannung UTTL anliegt, welche die Schaltspannung des Verstärkers N2 festlegt.

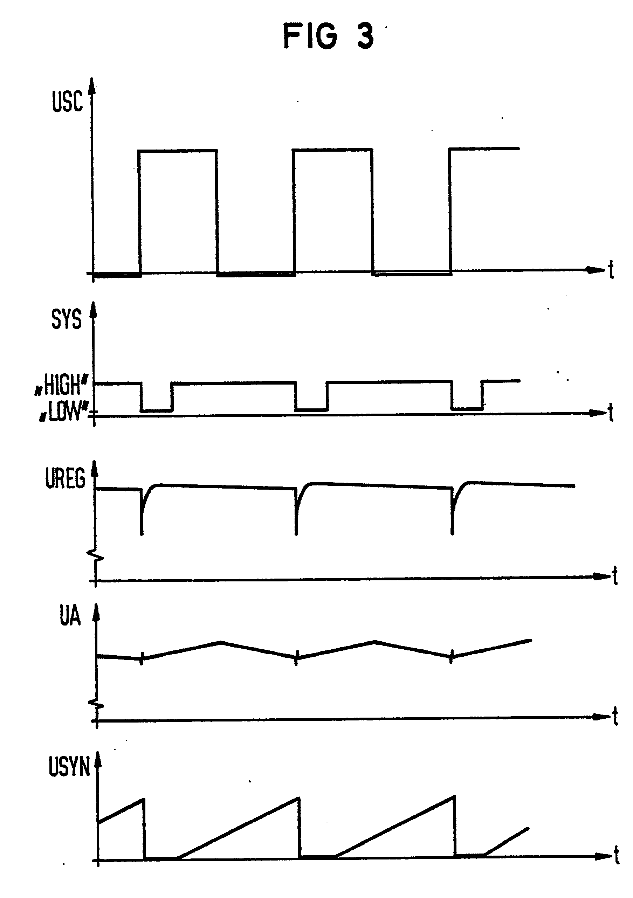

In Fig. 3 sind qualitativ typische Signal- bzw. Spannungsverläufe in Abhängigkeit von der Zeit an einigen Punkten des in Fig. 1 dargestellten Schaltreglers angegeben. Dies sind im einzelnen eine am Meßpunkt P1 abgreifbare Spannung USC, eine an der Ausgangsklemme 14 des Verstärkers N2 abgreifbare Spannung USYN, eine am Meßpunkt P3 abgreifbare Spannung UREG, sowie die an den Ausgangsklemmen A1 und A2 anliegende zur Stromversorgung des Monitors dienende Spannung UA, wobei deren Wechselstromanteil stark vergrößert gezeichnet ist.

Im folgenden wird die an sich bekannte Wirkungsweise der Spannungsumsetzung des Schaltreglers ohne der erfindungsgemäßen Schaltungsanordnung beschrieben.

Der Hauptstrompfad verläuft vom Eingang E1 über den Schalttransistor T1 und der Induktivität L1 zum Ausgang A1. Im Ein-Zustand des Schalttransistors T1 fließt der Strom durch die Induktivität L1 und der Kondensator C2 wird aufgeladen. Die Induktivität L1 dient dabei zur Strombegrenzung. In ihr wird durch den Stromfluß ein Magnetfeld aufgebaut. Wenn der Kondensator C2 die Ausgangsspannung erreicht hat, wird der Schalttransistor T1 gesperrt. Der Stromfluß durch den Schalttransistor T1 wird unterbrochen und das Magnetfeld in der Induktivität L1 bricht zusammen. Dadurch wird eine Gegenspannung induziert, die zwischen dem Kondensator C2 und dem Kollektor des Schalttransistors T1 wirksam wird. Der Kondensator C2 behält durch seine kapazitive Wirkung im ersten Moment seine Spannung bei und deshalb wird durch die induzierte Gegenspannung das Kollektorpotential des Schalttransistors T1 abgesenkt. Sobald das Kollektorpotential ca. -1 Volt erreicht hat, schaltet die Diode D1 durch und hält das Potential auf diesem Wert fest. Der Strom fließt nun durch die Induktivität L1, die an den Ausgangsklemmen A1 und A2 angeschlossene Last, über die Masseleitung und die Diode D1 wieder zur Induktivität L1. Die Spannung am Kondensator C2 sinkt nun langsam ab.

Die Ausgangsspannung UA wird über den Widerstand R6 vom Verstärker N1, der als Komparator ausgebildet ist, abgetastet. Der Verstärker N1 vergleicht die Ausgangsspannung UA mit einer Referenzspannung UREF, die am Meßpunkt P2 anliegt. Diese Referenzspannung UREF wird von der Eingangsspannung UE abgeleitet und wird über den Widerstand R3 zum Eingang 11 des Verstärkers N1 geführt. Im Ruhezustand ist die Ausgangsspannung UA kleiner als die Referenzspannung UREF. Der Ausgang 13 des Vestärkers N1 ist dann hochohmig und über den Widerstand R2 fließt im Transistor 5 ein Basisstrom. Der Transistor T5 schaltet durch und steuert über den Widerstand R1 den Schalttransistor T1 an. Dieser schaltet durch und sein Kollektorpotential wird bis fast auf die Höhe der Eingangsspannung UE gezogen.

Wenn die Ausgangsspannung UA nun über die Höhe der Referenzspannung UREF ansteigt, so schaltet der Ausgang 13 des Verstärkers N1 auf "Low"-Zustand. Der Spannungssprung am Ausgang 13 des Verstärkers N1 beträgt ca. -0,7 Volt, da die Basis-Emitterstrecke des Transistors T5 überbrückt wird. Dieser Spannungssprung wird über den Kondensator C4 auf dem Eingang 11 des Verstärkers N1 eingekoppelt. Damit wird erreicht, daß der Verstärker N1 bei einer kleinen Senkung der Ausgangsspannung UA nicht direkt wieder umschaltet. Die Spannung am Eingang 11 des Verstärkers N1 wird über den Widerstand R3 wieder auf den vollen Wert der Referenzspannung UREF geladen. Die Zeitkonstante aus Widerstand R3 mit Kondensator C2 bestimmt weitgehend die Schaltfrequenz des Schaltreglers. Der Steuertransistor T5 wird nun gesperrt und in Schalttransistor T1 kann kein Basisstrom mehr fließen. Der Schalttransistor T5 schaltet deshalb den Hauptstromkreis, der von der Eingangsklemme E1 über die Emitter-Kollektor-Strecke des Schalttransistors T1 zur Induktivität L1 führt, ab. Der Widerstand R7 hebt im Sperrzustand des Schalttransistors T1 das Basispotential auf die Höhe des Emitterpotentials. Die im Magnetfeld der Induktivität L1 gespeicherte Energie wird an den Ausgang A1 und an den Kondensator C2 abgegeben. Die Spannung UA sinkt langsam wieder ab.

Im folgenden wird die Wirkungsweise der erfindungsgemäß vorgesehenen Schaltungsanordnung zur Synchronisierung der Zeilenfrequenz des Monitors mit der Schaltfrequenz des Schaltreglers beschrieben.

Das Einschalten des Schalttransistors T1 und damit das Einschalten der Induktivität L1 bewirkt Störspitzen, die zu Bildstörungen führen. Um die Bildstörungen zu vermeiden, wird die Schaltfrequenz des Schaltreglers mit der Zeilenfrequenz des Monitors synchronisiert. Das Einschalten des Schalttransistors T1 liegt nun in der Rücklaufphase des Bildstrahls.

Das von einem Bildgenerator BG zur Zeilenablenkung des Bildstrahls erzeugte Synchronisiersignal SYS wird an den Eingang 9 des als Komparator ausgebildeten Verstärkers N2 gelegt. Am Eingang 8 des Verstärkers N2 liegt über einen hier nicht dargestellten Spannungsteiler eine feste Spannung UTTL von beispielsweise 2 Volt an. Synchronisiert wird auf die abfallende Flanke des Synchronisiersignals SYS. Fällt das Signal SYS von "High"-Pegel auf "Low"-Pegel, so schaltet der Verstärker N2 seinen Ausgang 14 gegen Masse. Dadurch wird am Kondensator C3 ein negativer Spannungssprung erzeugt, der kapazitiv auf den Eingang 10 des Verstärkers N1 eingekoppelt wird. Mit dem Eingang 10 des Verstärkers N1 wird über den Widerstand R6 auch die Ausgangsspannung UA abgetastet. Für den Eingang 10 des Verstärkers N1 entsteht also dieselbe Wirkung wie bei einer plötzlichen Absenkung der Ausgangsspannung UA. Deshalb schaltet der Verstärker N1 in diesem Moment den Steuertransistor T5 und somit den Schalttransistor T1 ein. Der Ausgang 13 des Verstärkers N1 wird hochohmig und durch den Widerstand R2 fließt ein Basisstrom in den Steuertransistor T5.

Der Schaltvorgang löst zugleich einen positiven Spannungssprung am Eingang 11 des Verstärkers N1 aus, der über den Kondensator C4 vom Ausgang 13 des Verstärkers N1 eingekoppelt wird. Damit wird verhindert, daß der Verstärker N1 sofort wieder umschaltet.

Sobald das Synchronisiersignal SYS von "Low"-Pegel auf "High"-Pegel umschaltet, wird der Ausgang 14 des Verstärkers N2 hochohmig. Über den Spannungsteiler, bestehend aus den Widerständen R4 und R5 wird der Kondensator C3 jetzt wieder geladen. Über den Kondensator C3 fließt nur ein geringer Rückladestrom von einigen Mikroampere. Dieser Rückladestrom wird über den Widerstand R6 niederohmig zum Ausgang des Schaltreglers abgeleitet und beeinflußt die Regelung der Ausgangsspannung UA nur mit einem Spannungsabfall von einigen Millivolt.

## Patentansprüche

1. Stromversorgungs-Anordnung für einen nach dem zeilenweise geschriebenen Punktrasterverfahren arbeitenden Monitor (MO) mit einem einen elektronisch getakteten Schalter (T1) enthaltenden Schaltregler (SR), der eine am Eingang des Schaltreglers (SR) anliegende, ungeregelte Gleichspannung (UE) in eine an seinem Ausgang abgreifbare, geregelte Gleichspannung (UA) zur Stromversorgung des Monitors (MO) umsetzt,
dadurch gekennzeichnet, daß der Einschaltvorgang des elektronischen Schalters (T1) mit Hilfe einer von der Zeilenfrequenz gesteuerten Synchronisiereinrichtung (SE) in die dunkel getastete Rücklaufphase eines über eine Ablenkeinrichtung (AE) gesteuerten Bildstrahls des Monitors (MO) gelegt wird.

2. Stromversorgungs-Anordnung nach Anspruch 1,
dadurch gekennzeichnet, daß ein an sich zum Aufbau eines Bildes auf dem Bildschirm (BS) des Monitors (MO) benötigtes, von einem einer Ablenkeinrichtung (AE) des Monitors (MO) zugeordneten Bildgenerator (BG) erzeugtes Synchronisiersignal (SYS) zur definierten Steuerung des Einschaltzeitpunktes des elektronischen Schalters (T1) verwendet wird.

3. Stromversorgungs-Anordnung nach Anspruch 1 oder 2,
dadurch gekennzeichnet, daß durch die Sychronisiereinrichtung (SE) nur mit der abfallenden Flanke des Synchronisiersignals (SYS) der Einschaltzeitpunkt des elektronischen Schalters (T1) festgelegt ist.

4. Stromversorgungs-Anordnung nach einem der vorhergehenden Ansprüche,
dadurch gekennzeichnet, daß die Synchronisiereinrichtung (SE) einen als Komparator ausgebildeten Verstärker (N2) und einen Kondensator (C3) enthält, über die das Synchronisiersignal (SYS) in die Regelung der Ausgangsspannung (UA) eingekoppelt wird.

5. Stromversorgungsanordnung nach Anspruch 4,
dadurch gekennzeichnet, daß die Rückladung des Kondensators (C3) über einen hochohmigen Widerstand (R6) zum Ausgang (A1, A2) des Schaltreglers (SR) abgeleitet wird.

## Claims

1. Power supply arrangement for a monitor (MO) operating according to the dot matrix process written by lines having a switch-mode power supply (SR) containing an electronically clocked switch (T1), which switch-mode power supply converts an unregulated DC voltage (UE) which is present at the input of the switch-mode power supply (SR) into a regulated DC voltage (UA), which can be tapped at its output, for supplying the monitor (MO) with power, characterized in that the switch-on process of the electronic switch (T1) is placed in the blanked flyback phase of an image ray, controlled via a deflection device (AE), of the monitor (MO) with the aid of a synchronization device (SE) controlled by the line frequency.

2. Power supply arrangement according to Claim 1, characterized in that a synchronization signal (SYS) required per se for building up an image on the screen (BS) of the monitor (MO) and generated by an image generator (BG) assigned to a deflection device (AE) of the monitor (MO) is used for the defined control of the switch-on point of the electronic switch (T1).

3. Power supply arrangement according to Claim 1 or 2, characterized in that the switch-on point of the electronic switch (T1) is determined only at the trailing edge of the synchronization signal (SYS) by means of the synchronization device (SE).

4. Power supply arrangement according to one of the preceding claims, characterized in that the synchronization device (SE) contains an amplifier (N2), constructed as a comparator, and a capacitor (C3), via which amplifier and capacitor the synchronization signal (SYS) is coupled into the control of the output voltage (UA).

5. Power supply arrangement according to Claim 4, characterized in that the discharge of the capacitor (C3) is conducted away via a high-impedance resistor (R6) to the output (A1, A2) of the switch-mode power supply (SR).

## Revendications

1. Dispositif d'alimentation en courant pour un moniteur (MO) travaillant selon le procédé à trame de points à balayage ligne-par-ligne, et comportant un régulateur commuté (SR), qui contient un interrupteur (T1) à commande électronique et convertit une tension continue non réglée (UE), appliquée à l'entrée du régulateur commuté (SR), en une tension continue réglée (UA), pouvant être prélevée à sa sortie, pour l'alimentation en courant du moniteur (MO), caractérisé par le fait que l'opération de fermeture de l'interrupteur électronique (T1) est réalisée à l'aide d'un dispositif de synchronisation (SE) commandé par la fréquence de lignes, pendant la phase de retour à l'état éteint d'un faisceau, commandé par un dispositif de déviation (AE), de formation de l'image sur le moniteur (MO).

2. Dispositif d'alimentation en courant suivant la revendication 1, caractérisé par le fait qu'on utilise un signal de synchronisation (SYS) nécessaire pour la formation d'une image sur l'écran (BS) du moniteur (MO) et produite par un générateur d'images (BG) associé à un dispositif de déviation (AE) du moniteur (MO), pour réaliser la commande définie de l'instant de fermeture de l'interrupteur électronique (T1).

3. Dispositif d'alimentation en courant suivant la revendication 1 ou 2, caractérisé par le fait que l'instant de fermeture de l'interrupteur électronique (T1) est fixé par le dispositif de synchronisation (SE), uniquement à l'aide du flanc retombant du signal de synchronisation (SYS).

4. Dispositif d'alimentation en courant suivant l'une des revendications précédentes, caractérisé par le fait que le dispositif de synchronisation (SE) contient un amplificateur (N2) réalisé sous la forme d'un comparateur, et un condensateur (C3), à l'aide desquels le signal de synchronisation (SYS) est injecté dans le système de régulation de la tension de sortie (UA).

5. Dispositif d'alimentation en courant suivant la revendication 4, caractérisé par le fait que la décharge du condensateur (C3) est dérivée, par l'intermédiaire d'une résistance (R6) de forte valeur ohmique, en direction de la sortie (A1, A2) du régulateur commuté (SR).

# FIG 1

FIG 2

EP 0 218 146 B1

# FIG 3